# EUROPEAN PATENT APPLICATION

(11) **EP 1 505 805 A1**
(43) Date of publication of application: **09.02.2005**
(21) Application number: 03723338.4
(22) Date of filing: 12.05.2003
(51) Int. Cl.: H04M 1/56, H04M 1/2745, H04M 3/42, H04Q 7/38

(54) **MOBILE TERMINAL HAVING INTERNATIONAL DIAL OPERATION FUNCTION AND INTERNATIONAL DIAL SYSTEM**

(30) Priority: 10.05.2002 JP 2002135767
(71) Applicant: NTT DoCoMo, Inc., Tokyo 100-6150 (JP)
(72) Inventor: TAYA, Masaaki, c/o NTT DoCoMo, Inc., Chiyoda-ku, Tokyo 100-6150 (JP); TAMURA, Motoshi, c/o NTT DoCoMo, Inc., Chiyoda-ku, Tokyo 100-6150 (JP)
(74) Representative: Röhl, Wolf Horst, Dipl.-Phys., Dr.
(86) International application number: PCT/JP2003/005902
(87) International publication number: WO 2003/096659

(57) **Abstract**

There is provided a mobile terminal with an international dialing operation function, which enables unfamiliar and troublesome conversion into an international telephone number to be performed with a simpler operation and which performs conversion into an appropriate telephone number according to the location where the terminal has moved.

The mobile terminal identifies its location with a location identification section and determines whether an originating call is a call to the originator's country or to a foreign country according to the identified location. If the call is to a foreign country, an international prefix according to the identified location is identified. Furthermore, a country code is set to correspond to the originator's country, or it is identified from the inputted counterpart' s telephone number and the like. Conversion into an international telephone number is performed using the country code, and then a call is originated. When the call is originated to the originator's country, the domestic telephone number is used for origination without being converted. A converted number is displayed on an operation screen so that the originator may confirm whether it is appropriate or not.

## Description

### Technical Field

The present invention relates to a mobile terminal with an international dialing operation function, an international dialing program and an international dialing system, and in particular to a mobile terminal with an international dialing operation function, an international dialing program and an international dialing system for performing dialing after conversion into an appropriate international telephone number.

### Background Art

Recently, an international telephone call is frequently made between a caller and a recipient in different countries. In order to make an international telephone call, a telephone number usually used for a domestic call (a domestic telephone number) cannot be used for dialing. A domestic telephone number must be converted into an international telephone number for making an international telephone call.

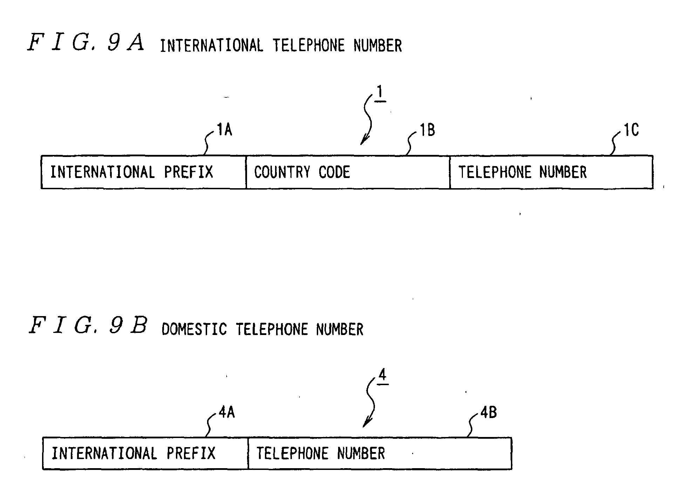

Figure 9A shows the format for international telephone numbers. As shown in Figure 9A, an international prefix 1A followed by a country code 1B of the counterpart and a telephone number 1C are inputted as an international telephone number to make an international telephone call. The international prefix 1A is a number indicating that the call is an international telephone call, and it is specified according to the country and region from which the international telephone call is originated. The telephone number 1C is information which is included in the domestic telephone number of the counterpart and which can also identify the counterpart in making an international telephone call. For example, in the case of making an international telephone call from overseas to Japan, the international prefix in the country from which the telephone call is originated is inputted, and "81", the country code of Japan, is added as the country code 1B. Then, as the telephone number 1C, information required for the international telephone number for identifying the counterpart is acquired from a Japanese domestic telephone number and inputted. The Japanese domestic telephone number consists of a domestic prefix 4A, which is a prefix number used only in Japan, and a telephone number 4B to correspond to the telephone number 1C of an international telephone number as shown in Figure 9B. Therefore, the number obtained by removing the domestic prefix located at the top from the domestic telephone number is inputted. For example, in the case of a mobile phone number "090-xxxx-xxxx", "90xxxxxxxx" without "0" is inputted subsequently after the country code 1B.

As described above, conversion into an international telephone number is required to make an international call. The conversion into an international telephone number, however, is unfamiliar and troublesome to many people, and wrong dialing, that is, inputting a wrong number and originating a call with the wrong number is caused.

Recently, with the spread of roaming services, the same mobile terminal can be used internationally, and cases of making an international telephone call using a mobile terminal are considered to increase. In such cases, since an originating mobile terminal moves, the international prefix must be set according to the location of origination as described above. Thus, consideration must be paid to use of an international telephone call with a mobile terminal.

The object of the present invention is particularly to provide a mobile terminal with a function of performing troublesome conversion into an international telephone number with easier operability and a dialing function, an international dialing program and an international dialing system.

### Disclosure of the Invention

Amobile terminal with an international dialing operation function according to the present invention is characterized in comprising location identification means for identifying a location of the terminal at the time of origination of a call and number conversion means for, according to the identified location, converting an inputted counterparts telephone number into a telephone number with which connection to the counterpart is possible from the location, and in originating a call using the telephone number converted by the number conversion means.

By configuring the mobile terminal to include such location identification means, information required for an international call according to locations can be automatically attached, and it is also possible to determine whether or not a call is an international call through comparison with a counterpart's telephone number or information held in the mobile terminal.

The mobile terminal with an international dialing operation function is characterized in further comprising confirmation means for requesting confirmation on whether or not the telephone number converted by the number conversion means is correct, and in originating a call using the converted telephone number if it is confirmed that the converted telephone number is correct.

That is, by configuring the mobile terminal to present a converted telephone number to the originator without originating a call immediately after conversion of the telephone number and enable origination after confirmation by the originator on whether the converted telephone number is correct or not, it is possible to originate a call using a certainly correct telephone number.

The mobile terminal with an international dialing operation function is characterized in that, if a call from the identified location to a counterpart is an international call, the number conversion means identifies an international prefix corresponding to the identified location and performs conversion into an international telephone number using the international prefix.

The mobile terminal with an international dialing operation function is characterized in further comprising telephone number's country identification means for identifying a country to which the inputted counterpart's telephone number belongs.

That is, a telephone number' s country may be automatically identified by comparing an inputted counterpart's telephone number with the number system for each country registered in advance, or the telephone number' s country may be identified based on telephone number's country information manually inputted by an originator. Alternatively, the telephone number's country may be identified by using telephone number's country information registered in association with counterparts' telephone numbers inside the mobile terminal in advance. By using such telephone number's country identification means, country code information required for conversion into an international telephone number can be attached, and it is also possible to determine whether a call is an international call or not through comparison between the country which the number for the call belongs and the identification location.

The mobile terminal with an international dialing operation function is characterized in that the confirmation means requests the confirmation in response to an external instruction.

The external instruction includes key input by an originator, for example. According to such configuration, a confirmation request is made only when an originator wants to confirm the converted telephone number, and a call can be immediately originated when confirmation is not required.

The mobile terminal with an international dialing operation function is characterized in that the confirmation means requests the confirmation if the inputted counterpart' s telephone number has been converted by the number conversion. means.

That is, themobile terminal with an international dialing operation function may be configured so that a confirmation request is automatically made whenever the number conversion is performed.

The mobile terminal with an international dialing operation function is characterized in that the number conversion means performs telephone number conversion at the point of time when the counterpart's telephone number is inputted.

The mobile terminal with an international dialing operation function is characterized in that the number conversion means performs telephone number conversion in response to an external instruction.

The mobile terminal with an international dialing operation function is characterized in that, if a call from the identified location to a counterpart is an international call, the number conversion means identifies a country code corresponding to the inputted counterpart's telephone number and performs conversion into an international telephone number using the identified country code.

The mobile terminal with an international dialing operation function is characterized in that, if a call from the identified location to a counterpart is an international call, the number conversion means identifies a telephone number required to be in an international telephone number for identifying the counterpart, from the inputted counterpart' s telephone number and performs conversion into an international telephone number using the identified telephone number.

The mobile terminal with an international dialing operation function is characterized in that the inputted counterpart' s telephone number is a telephone number selected from among telephone numbers registeredwith a telephone number directory held in the terminal.

The mobile terminal with an international dialing operation function is characterized in that the telephone number' s country identification means identifies the country to which the counterpart's telephone number belongs with the use of information on the country to which the selected counterpart's telephone number belongs and which is further inputted in addition to the selection of the counterpart's telephone number from the telephone number directory.

That is, it is also possible for the originator, when he has selected a counterpart's telephone number from the telephone number directory, to manually input what country the inputted number belongs to. In this case, by setting a particular country which is frequently specified as the telephone number's country to be further inputted, for all the telephone numbers, manual input of a telephone number's country can be omitted when the telephone number belongs to the particular country.

The mobile terminal with an international dialing operation function is characterized in that the location identification means identifies a location of the terminal based on network identification information received from a wireless base station with which communication is possible at the location of the terminal.

The international dialing system according to the present invention is an international dialing system including the mobile terminal with an international dialing operation function, and is characterized in that at least one of location identification means for identifying a location of the mobile terminal at the time of origination of a call and number conversion means for converting a counterpart's telephone number inputted into the mobile terminal into a telephone number with which connection to the counterpart is possible from the location is provided in a network to which the mobile terminal is connectable and the other means is provided in the mobile terminal.

### Brief Description of the Drawings

Figure 1A is a block diagram illustrating the configuration of a mobile terminal according to a first embodiment;
Figure 1B is a block diagram illustrating the detailed configuration of a telephone number input section of the mobile terminal;
Figure 1C is a block diagram illustrating the detailed configuration of a number conversion section;
Figure 2 illustrates an example of a mobile communication system in which the mobile terminal according to the first embodiment is used;
Figure 3 is a flowchart illustrating the operation of location identification by a location identification section;
Figure 4 is a flowchart illustrating the operation of location identification according to another method;
Figure 5 is a flowchart illustrating a first example of the number conversion operation by the number conversion section;
Figure 6 is a flowchart illustrating a second example of the number conversion operation by the number conversion section;
Figure 7A illustrates the configuration of a table used for number conversion;
Figure 7B illustrates the configuration of a table for registering a counterpart's telephone number and a country code in association with each other;
Figures 8A to 8C illustrate an international dialing system according to a second embodiment;
Figure 9A illustrates a format of an international telephone number, and
Figure 9B illustrates a format of a domestic telephone number which is used in Japan.

### Best Mode for Carrying Out the Invention

Embodiments of the present invention will be now described with reference to drawings. In each of figures referred to in the description below, the same reference numerals are given to the same portions as those in the other figures.

### (First embodiment)

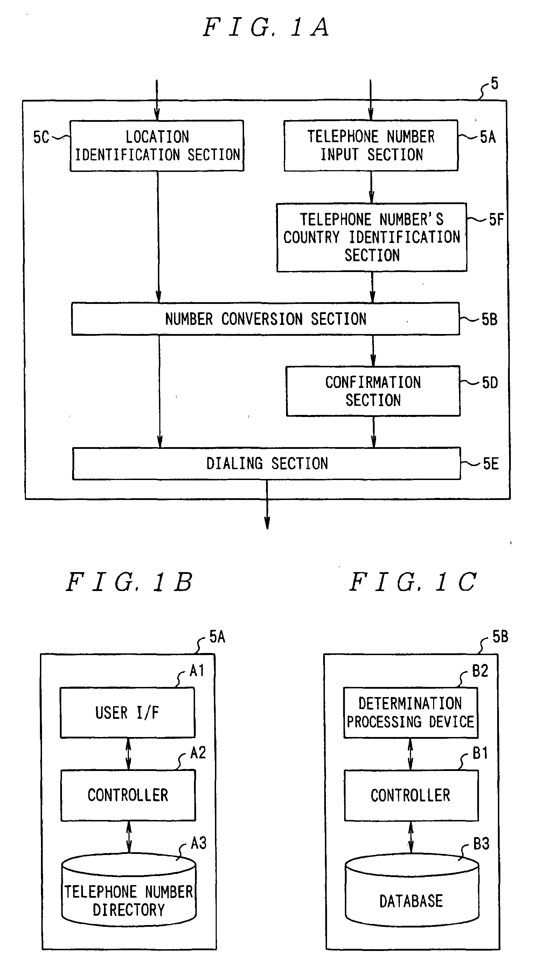

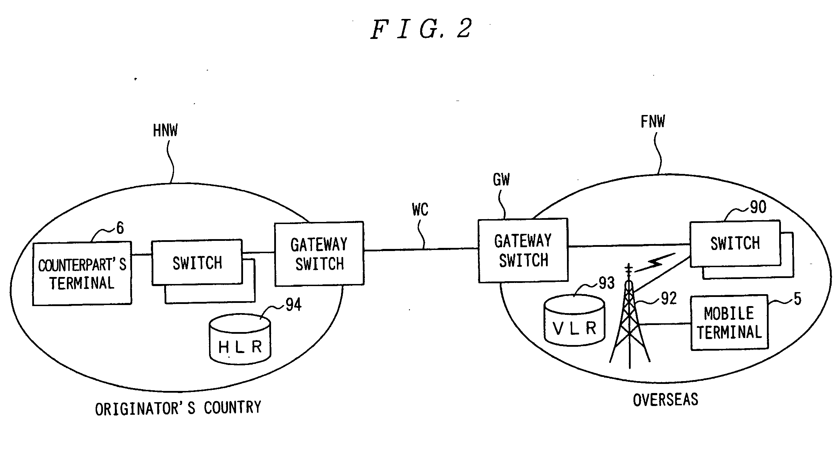

Figures 1A to 1C illustrate the configuration of a mobile terminal that performs conversion into a telephone number connectable to a counterpart according to locations of the mobile terminal. Figure 2 illustrates an example of a mobile communication system inwhich themobile terminal that performs conversion into a telephone number connectable to a counter part according to locations of the mobile terminal is used.

The mobile communication system of Figure 2 comprises an HLR (home location register) 94 for managing a mobile terminal 5 in a mobile communication network HNW for managing the mobile terminal 5, and comprises a VLR (visiting location register) 93 for temporarily managing the mobile terminal 5 which has moved from a different network and a wireless base station 92 for performing wireless communication with the mobile terminal 5 in a mobile communication network FNW different from the mobile communication network HNW. Each of the networks is provided with a gateway switch GW for performing switch among different networks and a communication line WC for connecting different networks to enable communication between the different networks.

In the mobile communication system, when detecting that the mobile terminal 5 has moved to the mobile communication network FNW, the VLR 93 registers location information on the mobile terminal and information on the mobile terminal 5 with the HLR 94 based on information received from the mobile terminal 5, and acquires information on the mobile terminal 5, such as subscriber information, from the HLR 94. Such management by VLR 93 and cooperation between the VLR 93 and the HLR 94 enable the mobile terminal 5 to originate and receive a call within the mobile communication network FMW to which ithasmoved. Furthermore, since the HLR 94 can always identify the location of the mobile terminal 5, receiving of a call with reference to the HLR 94 can be performed as done within the mobile communication network HNW.

Figure 2 shows a case where the mobile terminal 5 which has moved to the mobile communication network FNW (shown as "overseas" in the figure) originates a call to a counterpart's terminal 6 in the mobile communication network HNW (shown as "originator's country" in the figure).

As shown in Figure 1A, the mobile terminal 5 comprises: a telephone number input section 5A for accepting input of a counterpart's telephone number by the originator of the mobile terminal 5; a telephone number' s country determination section 5F for identifying the country to which the inputted counterpart's telephone number belongs; a location identification section 5C for identifying the location of the terminal at the tie of origination of a call; anumber conversion section 5B for converting a telephone number according to locations of the terminal; a confirmation section 5D for requesting confirmation from the originator on whether or not the telephone number has been converted correctly by the number conversion section 5B; and a dialing section 5E for performing dialing with the use of the number converted by the number conversion section 5B.

Figure 1B illustrates the detailed configuration of the telephone number input section 5A. As shown in the figure, the telephone number input section 5A comprises a user interface section A1 (hereinafter referred to as a user I/F section), a controller A2 and a telephone number directory A3.

The user I/F section A1 comprises operation buttons for accepting input of a telephone number and the like by an operator and a screen for showing the operation condition. In this embodiment, input of a counterpart's telephone number is accepted by the user I/F section A1.

The control section A2 controls each portion of the telephone number input section 5A.

The originator of the mobile terminal 5 registers counterparts' telephone numbers with the telephone number directory A3 in advance. When a counterpart's telephone number is registered, the country (for example, Japan) to which the counterpart' s telephone number belongs can be also stored. To dial a number, it is possible to select a counterpart's telephone number from among the registered telephone numbers instead of inputting the telephone number with the use of the operation buttons. If a counterpart's telephone number is selected from the telephone number directory A3 as described above, the originator may manually input and add information on the country to which the selected counterpart's telephone number belongs. Alternatively, by setting the originator's country, for example, as the telephone number's country, for all the telephone numbers registered with the telephone number directory A3, manual input of a telephone number's country can be omitted when the telephone number belongs to the originator's country.

### (Location identification section)

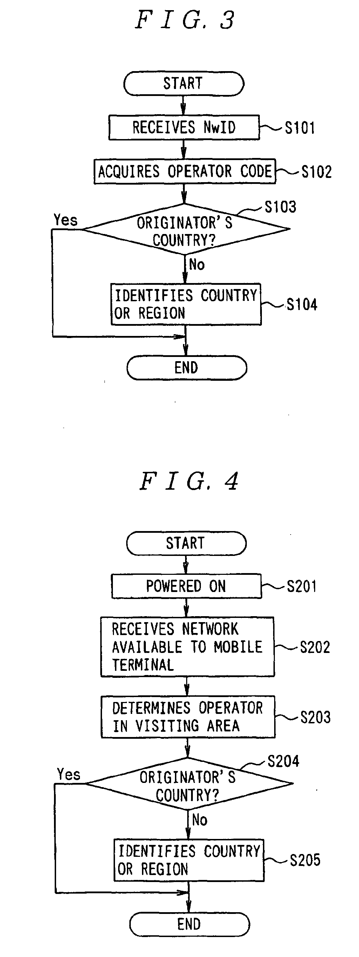

Returning to Figure 1A, the location identification section 5C identifies a location of a mobile terminal when it originates a call as described above. In this embodiment, the location identification section 5C comprises a wireless sending/receiving device not shown. The wireless sending/receiving device communicates with the wireless base station 92 so that the mobile terminal 5 connects to the counterpart's terminal 6, as shown in Figure 2. In this embodiment, network identification information (network identifier; hereinafter abbreviated to "NwID") which the wireless sending/receiving device receives from the wireless base station 92 is used as information for identifying a location of the mobile terminal 5. The NwID used in this embodiment can identify an operator providing communication services (an overseas mobile phone service provider). The wireless sending/receiving device receives an NwID only from a wireless base station capable of performing wireless communication. Therefore, by identifying the operator and then areas covered by services provided by the operator, the location of the mobile terminal can be identified. The location identification operation by this location identification section is shown in the flowchart of Figure 3.

At step S101 of Figure 3, a wireless sending/receiving section receives an NwID sent from a wireless base station.

At step S102, an operator code identifying an operator is acquired from the NwID received at step S101.

At step S103, it is determined whether or not the operator is an operator in the originator' s country based on the operator code. This determination is performed by identifying a country or region corresponding to the acquired operator code with the use of a table which is held in the location identification section and in which operator codes are associated with countries or regions to be covered by services provided by the operators and determining whether or not the identified country or region is the originator' s country. The originator' s country is a country where the originator usually uses his mobile terminal, and in this embodiment, it is the country where the originator is usually provided with communication services for the mobile terminal 5 as described above. If it is determined that the country is not the originator's country, that is, the country is a foreign country, then the process further proceeds to step S104 to identify the country or region.

At step S104, the country or region where the mobile terminal is located is identified based on the operator code.

By using an NwID to identify a location makes, it is possible to identify a location without requiring an originator to perform a particular operation every time he originates a call, even if each call is originated at a different location. The present invention does not limit identification of a location of the mobile terminal 5 to be performed based on receiving of the NwID. The method shown in the flowchart of Figure 4 may be used to identify a location. The operation shown in Figure 4 will be now described below. At step S201 of Figure 4, a mobile terminal is powered on for the first time at a place where an originator has moved. At step S202, the mobile terminal receives NwIDs from multiple networks available to the mobile terminal. At step S203, the originator selects an operator to use from among the available networks from which the mobile terminal has received NwIDs (at step S202) and determines the operator. At steps S204 and S205, a country or region is identified based on the operator selected at step S203, similarly to steps S103 and S104 of Figure 3. Thus, it is possible to perform suitable number conversion appropriate for the selected network even when there are multiple available networks.

### (Number conversion section)

Returning to Figure 1A, the number conversion section 5B converts a telephone number based on the location of the terminal as described above. The detailed configuration of the number conversion section 5B is shown in Figure 1C. As shown in Figure 1C, the number conversion section comprises a determination processing device B2 for performing a determination processing, a controller B1 for controlling each device, and a database B3 having various tables used for conversion of a telephone number.

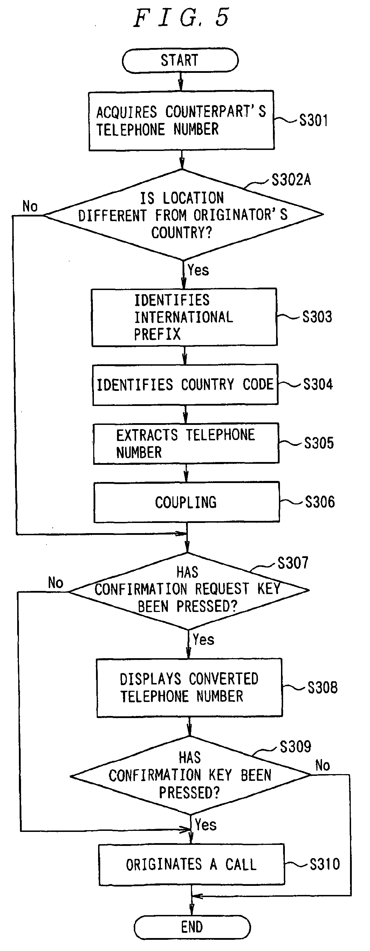

The number conversion operation by the number conversion section will be now described with regard to the flowchart shown in Figure 5 and with reference to Figures 9A and 9B which illustrate the configurations of an international telephone number and a domestic telephone number in Japan.

At step S301 of Figure 5, a counterpart' s telephone number inputtedby an originator is acquired from the telephone number input section. The counterpart's telephone number may be inputted with the use of a telephone number directory or may be manually inputted by the originator, as described above.

At step S302A, the result of location identification by the location identification section is acquired. If the location identification result is determined to indicate the originator's country, the process ends without performing conversion of the telephone number. If the location identification result is determined to indicate a foreign country, then the country or region where the mobile terminal is located and which has been identified by the location identification section is received, and the process proceeds to step S303.

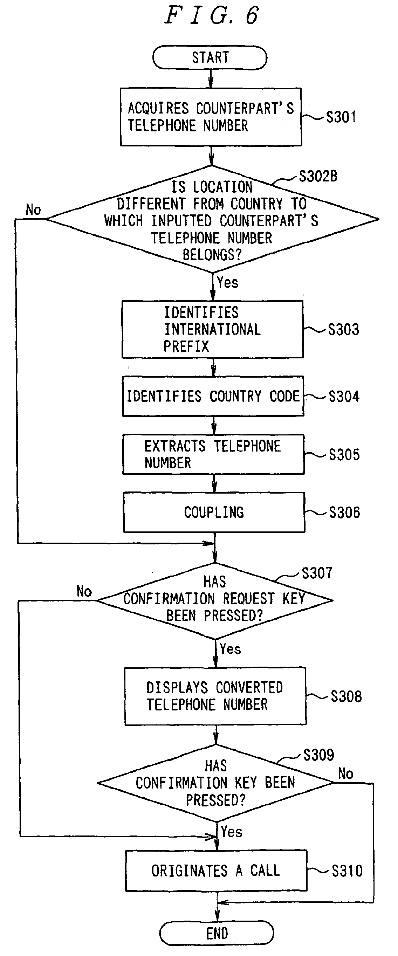

Whether to convert a telephone number based on the result of location identification can be determined not only based on determination on whether or not the country is the originator' s country but also based on the determination shown at step S302B of Figure 6. That is, at step S301 of the figure, the counterpart's telephone number is acquired as described above. In this case, the country to which the counterpart's telephone number belongs is identified by the telephone number's country determination section. At step S302B, if the identified country to which the counterpart's telephone number belongs is different from the origination location identified by the location identification section (in the case of "Yes" in the figure), then the call is determined to be an international call, and the process proceeds to step S303. Otherwise (in the case of "No" at step S302B), the process ends without converting the number. The subsequent steps after step S303 of Figure 6 are the same as those after step S303 of Figure 5.

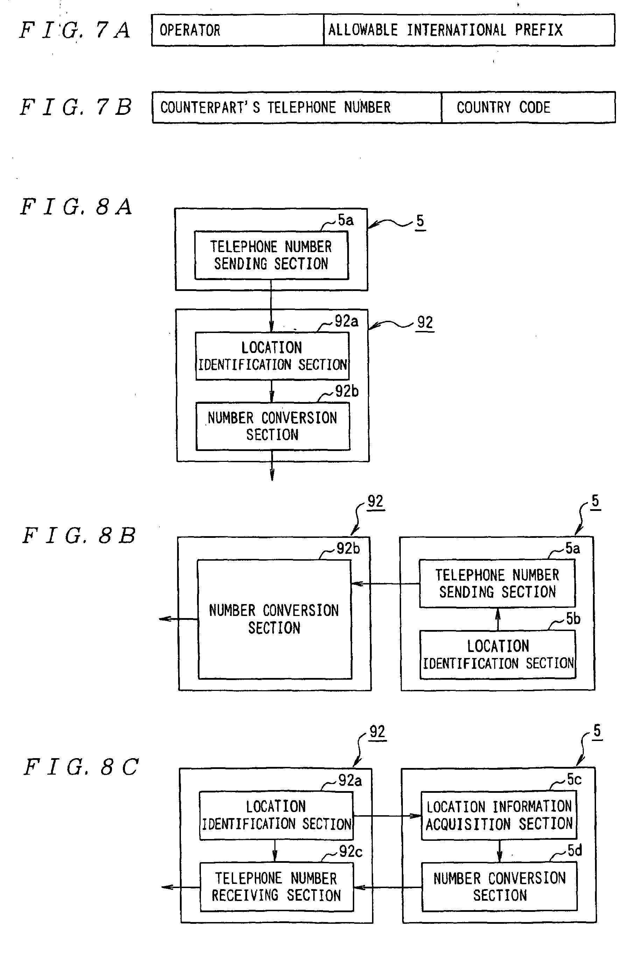

At step S303, an international prefix is identified. The international prefix is a number indicating that a call is an international call as described in the section of "Background Art". The international prefix identifies an originating-side gateway switch for exchanging international communication, and therefore specified for each country or region covered by the gateway switch. Accordingly, the international prefix is identified from correspondence relationships between countries or regions and international prefixes, based on the country or region where the mobile terminal is located, which is identified by the location identification section. Alternatively, in the case where the gateway switch which can be used by a selected operator is different, the international prefix is identified from correspondence relationships between operators and international prefixes allowed for the operators. In this case, if an operator corresponds to multiple international prefixes, all the international prefixes allowed for the originator may be presented, for example, and a selected one prefix may be used. The correspondence relationships between countries or regions and international prefixes are saved as a table, for example, in the above-mentioned database in advance. Figures 7A and 7B show the configuration of a table for specifying a correspondence relationship between an operator and an allowed international prefix. Such a table may be recorded to the mobile terminal in advance for all the operators, for example. Alternatively, after determination of an operator at a place where the mobile terminal has moved to, the mobile terminal may acquire information on an international prefix which can be used for the operator from a device on a network, such as a VLR, to which the mobile terminal connects.

At step S304, a country code is identified. In this embodiment, the country code is generally set to a country code corresponding to the originator's country. When counterparts' telephone numbers belonging to various countries other than the originator's country are mixed and registered with the telephone number directory, as shown in Figure 7B, it is desirable to hold the counterparts' telephone numbers and country codes of the countries to which the counterparts' telephone numbers belong in association with each other. This makes it possible to easily originate a call only by selecting a counterpart's telephone number from a telephone number directory without manually specifying a country code each time.

At step S305, information required for an international telephone number is extracted from the inputted counterpart' s telephone number. The information required for an international telephone number, which is to be extracted here, is an international prefix 1A and a country code 1B followed by a telephone number 1C as shown in Figure 9A. For example, in Japan, a domestic telephone number 4 comprises a domestic prefix 4A and a telephone number 4B as shown in Figure 9B described above. Accordingly, if a counterpart is in Japan, the telephone number 4B corresponding to the telephone number 1C of a telephone number 1 is extractedby removing the domestic prefix 4A ("0"). In this case, telephone numbers used for domestic communication may include special numbers which are not based on the configuration shown in Figure B, such as those of the emergency service and the police, and numbers for which origination from overseas is regulated (such as 0120 and 0990) . As for these numbers, a list may be created and a processing for regulating conversion may be performed.

At step S306 of Figure 5, the international prefix identified at step S304, the country code identified at step S305 and the telephone number extracted at step S306 are coupled in the order shown in Figure 9A. An international telephone number is generated by such coupling.

As described above, when a mobile terminal is used in an originator's country, it is possible to use a telephone number registered with a telephone number directory for a domestic call without conversion thereof. Even if the mobile terminal is in a foreign country, that is, it is roaming, the originator only has to select a telephone number from the telephone number directory (in most cases, domestic telephone numbers used in his own country are registered) to make a call to his own country from the foreign country where he stays. After input of the selection, the mobile terminal is automatically determined to be in a foreign country, and an appropriate international prefix is added no matter which country the originator stays in, the telephone number is converted into an international telephone number, and communication from the foreign country to the originator's country is enabled.

With regard to the timing for performing number conversion, the number conversion may be performed when a counterpart's telephone number has been inputted and determined by an originator, for example, by pressing an origination button. Alternatively it may be performed when a special operation for number conversion, for example, pressing a particular operation key other than numeral keys has been performed. If number conversion is triggered by pressing the origination button, the originator can easily originate an international call without being conscious of whether the originating call is a domestic telephone call or an international telephone call. If number conversion is performed only when a special operation is performed, number conversion can be performed selectively without performing number conversion for all dialings. Accordingly, in the case of using a mobile terminal performing the operation as shown in Figure 5 to originate a domestic call in a foreign country, it can be achieved by directly dialing a domestic telephone number available in the foreign country without performing number conversion.

Conversion by the number conversion section may be as described below. It can be assumed that, when an originator registers a telephone number of a country other than his own country or the country where he stays with a telephone number directory, he often registers the telephone number for identifying a counterpart with a country code attached thereto. Accordingly, at the identification of a country code at step S304 of the flowchart in Figure 5, a country code may be derived from the registered or inputted telephone number with a country code attached thereto. Thus, conversion into an international telephone number by telephone number conversion means canbe performed tomake an international call to a country other than the originator's own country while he is roaming.

In order to enable such conversion, location identification by the location identification section is utilized not only for dialing but also for registration with a telephone number directory. If the location is determined to be in a foreign country and an originator registers adomestic telephone number available in the foreign country, the telephone number can be registered with a country code automatically attached thereto as shown in Figure 7B. Thus, a telephone number of a country other than the originator's country is registered with a country code attached thereto, so that telephone number conversion can be performed by deriving a country code from a registered telephone number even when the originator is roaming in various countries. Furthermore, all the telephone numbers are registered in association with country codes as shown in Figure 7B, so that differentiation between an international telephone number and a domestic telephone number can be more completely performed through step S302B of Figure 6, that is, through comparison between the originator's location identified by the location identification section and a country code.

However, an international call made with the use of a mobile terminal, whether in the originator's country or a foreign country, is usually a call from a foreign country to the originator's own country in most cases, and most of calls other than that are assumed to be domestic calls. Accordingly, by selectively performing number conversion as described above or confirming a converted number with a confirmation section as described later, more appropriate conversion can be performed.

### (Confirmation section)

Returning to Figures 1A to 1C, the confirmation section 5D confirms whether or not a telephone number has been converted by the number conversion section 5B to an originator who has inputted a counterpart' s telephone number. The confirmation method is not especially limited and any method may be applicable only if it can request confirmation from the originator. For example, a converted telephone number may be displayed on a screen, and it is requested to press the origination button among the operation buttons if the telephone number is correct. Since conversion into an international telephone number is unfamiliar to most people, indication to the effect that the number is an international telephone number, an originating country and a counterpart's country may be displayed.

An example of an operation flow from when confirmation is requested after conversion of a number until a call is originated with the use of the converted telephone number is shown by steps S306 to S310 of Figure 5. At step S306 of the figure, it is detected that an origination request key (the "*" key in the figure) has been pressed by the originator who wants to confirm the converted telephone number. If it is detected that the origination request key has been pressed ("Yes" in the figure) , the converted number is displayed (step S308) . In this case, if the conversion is wrong, the originator who has confirmed the display can perform re-editing. Alternatively, a screen may be displayed which guides the originator so that he can easily instruct conversion by re-specifying the conditions such as an originating country and a counterpart's country. After that, if input of an appropriate counterpart's number is confirmed and pressing of a predetermined confirmation key is detected ("Yes" at step S309), then a call is originated (step S310). If pressing of a confirmation request key is not detected after input of a counterpart's number ("No" at step S307), a call is automatically originated with the converted number.

As described above, a confirmation request is made in response to a key input by the originator, so that the confirmation request is made only when the originator wants to make confirmation, and a call can be originated without a special operation similarly to the case of a usual international telephone call.

Alternatively, a confirmation may be automatically requested whenever a call is determined to be one to a foreign country and therefore conversion into an international telephone number is performed.

By requesting confirmation as described above, it is possible to originate a call more certainly. Furthermore, as described above, it is possible to prevent a telephone number inputted for a domestic call in a foreign country from being determined to be a call overseas, automatically converted into a number for an international call and dialed.

Such number conversion performed according to locations is not limited to an international telephone call. For example, when it is necessary to attach information identifiedaccording to locations of an originating terminal, such as the international prefix, for a call to a different domestic telephone network, it is possible to attach a number according to an identified location with the use of the location identification means according to present invention. When conversion in accordance with a different rule identified according to locations is requested, such as conversion into an international telephone number, the conversion can be also performed.

It is obvious that, by preparing a recording medium on which programs for realizing the operations shown in Figure 4 or Figure 5 and described above are recorded and controlling each portion of Figures 1A to 1C, the same number conversion operation as described above can be performed.

It is also obvious that, by controlling the processing unit included in a mobile terminal with the program recorded on the recording medium, the number conversion operation can be performed similarly to the above description. The program recorded on the recording medium for performing such an operation is not only a program recorded on the mobile terminal in advance but also may be configured to be such that the mobile terminal can download from a network through communication.

That is, the present invention may be further embodied in the following aspects with regard to the description in the claims:
(1) An international dialing program characterized in comprising a location identification step of identifying a location of the terminal in which the international dialing program is included and a number conversion step of, according to the location, converting an inputted counterpart's telephone number into a telephone number with which connection to the counterpart is possible from the location, and in originating a call using the telephone number converted by the number conversion step.
(2) The international dialing program according to (1) characterized in further comprising a confirmation step of requesting confirmation on whether or not the telephone number converted by the number conversion step is correct.
(3) The international dialing program according to (2) or (3) , characterized in that the confirmation step requests the confirmation in response to an external instruction.
(4) The international dialing program according to (2) or (3), characterized in that the confirmation step requests the confirmation if the inputted counterpart's telephone number is converted by the number conversion means.
(5) The international dialing program according to any one of (1) to (4), characterized in that the number conversion step performs telephone number conversion at the point of time when the counterpart's telephone number is inputted.
(6) The international dialing program according to any one of (1) to (4), characterized in that the number conversion step performs telephone number conversion in response to an external instruction.
(7) The international dialing program according to any of (1) to (6), characterized in that, if a call from the identified location to a counterpart is an international call, the number conversion step identifies a country code corresponding to the inputted counterpart's telephone number and performs conversion into an international telephone number using the identified country code.
(8) The international dialing program according to any of (1) to (7) , characterized in that, if a call from the identified location to a counterpart is an international call, the number conversion step identifies a telephone number required by an international telephone number for identifying the counterpart, from the inputted counterpart's telephone number and performs conversion into the international telephone number using the identified telephone number.
(9) The international dialing program according to any of (1) to (8), characterized in that the location identification step identifies a location of the terminal including the international dialing program based on network identification information received from a wireless base station with which communication from the location of the terminal is possible.

### (Second embodiment)

At least one of location identification means for identifying a location of a mobile terminal and number conversion means for converting a counterpart's telephone number inputted into the mobile terminal into a telephone number with which connection to the counterpart is possible from the identified location, according to the present invention, can be provided for a network device to which the mobile terminal can connect. Figures 8A to 8C show the configuration block of an international dialing system according to such second embodiment.

The network device includes, for example, a gateway switch GW, a switch 90, a wireless base station 92 and a VLR 93 in the mobile communication network FNW in Figure 2. These devices are for communicating with a mobile terminal, and information for identifying themselves in communication with other networks can be used as information for identifying a location of the mobile terminal. Figures 8A to 8C show an example of providing the wireless base station 92,with the above-described means.

In Figure 8A, a wireless base station 92 is configured to comprise a location identification section 92a for identifying a location of a mobile terminal 5 and a number conversion section 92b. Thus, based on a counterpart's telephone number sent from a telephone number sending section 5a of the mobile terminal 5 when a call is originated, an international prefix is attached so that the telephone number is converted into a number appropriate for the call originated via the base station.

Similarly, in Figure 8B, it is determined that the location of origination is overseas by a location identification section 5b in a mobile terminal 5, and a counterpart' s telephone number is automatically attached with the country code of the country to which the counterpart's telephone number belongs and an identifier indicating that the originating call is an international originating call and sent to a wireless base station 92. A number conversion section 92b of the wireless base station 92 (or possibly a switch 90) which has received information including the telephone number performs number conversion by attaching an international prefix, based on the received information.

In Figure 8C, the wireless base station 92 comprises a location identification section 92a for sending information identifying a location of the mobile terminal 5, for example, international prefix information itself, to a mobile terminal 5, and a telephone number receiving section 92c for receiving a telephone number converted by the mobile terminal 5 in response to the sending of the information and originating a call.

The above description relates to particular embodiments of the present invention, and those skilled in the art may think of various variations of the present invention. Any of such variations should be included in the technical scope of the present invention.

### Industrial Applicability

As described above, according to the present invention, the location of an originator's terminal is identified, and thereby, in the case of an international telephone call from overseas to an originator's country, whether the call is an international call or not is determined and an international prefix is identified so that automatic conversion into an international telephone number can be performed. Thus, there is obtained an effect that conversion into an international telephone number, which is unfamiliar and troublesome to many people, can be performed without especially being conscious of the conversion, in a foreign country.

Furthermore, by providing confirmation means for confirming a converted telephone number, the conversion of a telephone number can be performed more certainly and more easily.

## Claims

1. A mobile terminal with an international dialing operation function **characterized in** comprising location identification means for identifying a location of the terminal at the time of origination of a call and number conversion means for, according to the identified location, converting an inputted counterpart's telephone number into a telephone number with which connection to the counterpart is possible from the location, and in originating a call using the telephone number converted by the number conversion means.

2. The mobile terminal with an international dialing operation function according to claim 1, **characterized in** further comprising confirmation means for requesting confirmation on whether or not the telephone number converted by the number conversion means is correct, and in originating a call using the converted telephone number if it is confirmed that the converted telephone number is correct.

3. The mobile terminal with an international dialing operation function according to claim 1 or 2, **characterized in that**, if a call from the identified location to a counterpart is an international call, the number conversion means identifies an international prefix corresponding to the identified location and performs conversion into an international telephone number using the international prefix.

4. The mobile terminal with an international dialing operation function according to claim 2 or 3, **characterized in that** the confirmation means requests the confirmation in response to an external instruction.

5. The mobile terminal with an international dialing operation function according to claim 2 or 3 **characterized in that** the confirmation means requests the confirmation if the inputted counterpart' s telephone number has been converted by the number conversion means.

6. The mobile terminal with an international dialing operation function according any one of claim 1 to 5, **characterized in that** the number conversion means performs telephone number conversion at the point of time when the counterpart's telephone number is inputted.

7. The mobile terminal with an international dialing operation function according to any one of claims 1 to 5, **characterized in that** the number conversion means performs telephone number conversion in response to an external instruction.

8. The mobile terminal with an international dialing operation function according to any one of claims 1 to 7, **characterized in that**, if a call from the identified location to a counterpart is an international call, the number conversion means identifies a country code corresponding to the inputted counterpart's telephone number and performs conversion into an international telephone number using the identified country code.

9. The mobile terminal with an international dialing operation function according to any one of claims 1 to 8, **characterized in that**, if a call from the identified location to a counterpart is an international call, the number conversion means identifies a telephone number required by an international telephone number for identifying the counterpart, from the inputted counterpart' s telephone number and performs conversion into the international telephone number using the identified telephone number.

10. The mobile terminal with an international dialing operation function according to any one of claims 1 to 9, **characterized in that** the inputted counterpart's telephone number is a telephone number selected from among telephone numbers registered with a telephone number directory held in the terminal.

11. The mobile terminal with an international dialing operation function according to any one of claims 1 to 10, **characterized in that** the location identification means identifies a location of the terminal based on network identification information received from a wireless base station with which communication is possible at the location of the terminal.

12. An international dialing system including the mobile terminal with an international dialing operation function according to anyone of claims 1 to 11, the international dialing system being **characterized in that** at least one of location identification means for identifying a location of the mobile terminal at the time of origination of a call and number conversion means for converting a counterpart's telephone number inputted into the mobile terminal into a telephone number with which connection to the counterpart is possible from the location is provided in a network to which the mobile terminal is connectable and the other means is provided in the mobile terminal.
